(19) Europäisches Patentamt
European Patent Office
Office européen des brevets

(11) **EP 4 476 502 B1**

(12) **EUROPEAN PATENT SPECIFICATION**

(45) Date of publication and mention
of the grant of the patent:
**24.12.2025 Bulletin 2025/52**

(21) Application number: **22708460.5**

(22) Date of filing: **09.02.2022**

(51) International Patent Classification (IPC):
**G01D 5/20** (2006.01)    **G01D 3/08** (2006.01)

(52) Cooperative Patent Classification (CPC):
**G01D 5/2073; G01D 3/08**

(86) International application number:
**PCT/EP2022/053087**

(87) International publication number:
**WO 2023/151782 (17.08.2023 Gazette 2023/33)**

(54) **MONITORING A RESOLVER**

**ÜBERWACHUNG EINES RESOLVERS**

**SURVEILLANCE D'UN RÉSOLVEUR**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2024 Bulletin 2024/51**

(73) Proprietor: **ABB Schweiz AG
5400 Baden (CH)**

(72) Inventors:
• **ROBERTS, Richard
82205 Gilching (DE)**

• **HÖSL, Werner
92507 Nabburg (DE)**

(74) Representative: **Maiwald GmbH
Engineering
Elisenhof
Elisenstrasse 3
80335 München (DE)**

(56) References cited:
**WO-A1-2016/119814     JP-A- 2006 138 778**

**Description**

The present invention relates to methods and apparatus for monitoring a resolver, in particular for monitoring a resolver associated with a joint in an articulated robot arm.

An articulated robot arm comprises a plurality of links, which are coupled to each other, to a base or to an end effector by rotatable joints. A link of such a robot arm usually houses a motor and a gear for driving the rotation of a neighboring joint, and power and signal wires for the motor of this link and for motors of more distal links and, possibly, of the end effector. In operation, movement of the robot tends to wear on the isolation of the wires. In many cases, the isolation will not break down abruptly, but its resistance will decrease gradually, thereby distorting measurement signals that are fed back to a controller. Such distortion can cause the controller to derive from the measurement signals a position of the robot that differs from the real position. Such a deviation not only affects the precision with which the robot can carry out a given task but also harbingers total breakdown of the isolation which, when it occurs, can cause the robot to carry out unpredictable movements that can endanger people in its vicinity. The WO 2016119814 A1 refers to a resolver for a servo motor. The JP2006138778 A refers to an angle detector.

Conventionally, a resolver comprises so-called rotor and stator windings, which are rotatable with respect to each other and are inductively coupled so that when an alternating current is flowing in the rotor winding, an alternating voltage will be induced in the stator windings. The stator windings being arranged at right angles to each other, the induction in one of the stator windings is proportional to sin θ, θ being an orientation angle θ of the rotor, whereas in the other it is proportional to cos θ. These windings will therefore also be referred to as sine winding and cosine winding, respectively.

When the resolver is operating normally, total coupling between the rotor and stator windings does not depend on the relative orientation of the windings, i.e. the Pythagorean sum $\sqrt{U_s^2 + U_c^2}$ of the voltage amplitudes $U_s$, $U_c$ induced in sine and cosine windings of the stator is independent of the orientation of the rotor. When there is a defect in the insulation of wires associated to one of the stator windings, part or all off the voltage induced in it may be short circuited, so that a defect in insulation can be detected based on a variation of said sum. However, since the signal that must be evaluated in order to detect the defect is a sum of contributions from two windings, which will in most cases not become defective at the same time, the defect becomes the hard to detect the smaller the contribution from the defective winding is.

Evidently, when the rotor winding is orthogonal to the defective winding, no voltage is induced in the latter anyway, and the defect cannot be detected. When the rotor rotates out of the orthogonal orientation, the amplitude of the alternating voltage induced in the intact stator winding will decrease in proportion to the cosine of the misalignment angle, whereas in the defective winding it fails to increase. If the threshold for detection of a failure is set at e.g. 95% of the nominal value of the above sum, the rotor will have to rotate by θ=12.9° until the failure is detected if the voltage induced in the defective winding is shunted completely. In practice, due to manufacturing tolerances, temperature effects and the like, a more generous threshold may be necessary. If the failure threshold is set at 80%, position detection by the resolver can be wrong by up to θ=±36.9° before a malfunction of the resolver is detected.

If the induced voltage isn't shunted completely, i.e. if the insulation has a nonzero residual resistance, the angle by which the resolver can rotate before the malfunction is detected can still be larger. Therefore, when insulation gradually wears down, the defect can at first go completely unnoticed, merely causing a loss of accuracy in the movement of the robot, and, hence, a decrease in product quality.

There is thus a need, in particular in collaborative robot applications, for a resolver and for a resolver monitoring method by which such a deterioration can be detected in an early stage.

This need is satisfied, according to an aspect of the present invention, by a method for monitoring a resolver, the resolver comprising a pair of stator windings and rotor winding which is rotatable with respect to said stator windings and inductively coupled to these, the method comprising the steps of

    a) exciting the rotor winding with an alternating current having a an oscillation frequency and a first phase,
    b) obtaining voltages induced in the stator windings by the alternating a current flowing in the rotor,
    c) deciding that the resolver is defective if a shift between phases of a first one of said induced voltages and of the alternating current differs from a nominal phase shift by more than a predetermined phase threshold.

Monitoring the phases of voltages induced in the stator coils has a substantial advantage over monitoring total coupling in that a signal from a potentially defective winding can be evaluated directly, instead of first combining it with a signal from the other, presumably intact winding, and then evaluating the result, so that higher sensitivity is to be expected. When the resolver is intact, and current through the stator windings is negligible, the voltages induced in both stator windings should have the same phase shift with respect to the excitation current. When a defect in insulation enables a current to flow in one of the stator windings, it can be expected to affect the phase of the voltage due to the inductivity of the winding itself.

According to the invention, deciding whether said first induced voltage is critically phase-shifted comprises the steps of

d) deriving a reference signal from the alternating current, wherein the reference signal has the oscillation frequency and is phase shifted with respect to the alternating current by said nominal phase shift,
e) detecting a phase difference between the reference signal and said first induced voltage, and
f) deciding that the resolver is defective if said phase difference exceeds the phase threshold.

The operating temperature of the resolver may have an effect on the phase shift between the exciting current and the first induced voltage in a perfectly intact resolver. Since operating temperatures of the two stator windings will not differ much, such an effect may be compensated by choosing the second one of said induced voltages or a signal derived therefrom as the reference signal.

Since the second induced voltage will be zero while the rotor windings is orthogonal to the associated stator winding, it can be desirable to generate the reference signal independently from said induced voltages, e.g. by an oscillator which is tuned to the oscillation frequency and is phase coupled to the reference signal, or by monostable circuitry triggered by the reference signal.

The nominal phase shift can be made adaptable; in particular it may be contemplated to measure an existing phase shift between the exciting current and the induced voltages at a predetermined instant at which the resolver is assumed to be intact, e.g. when it is used for the first time after having been built into a device, such as an articulated robot arm, and to set the phase shift measured at that instant as the nominal phase shift.

The decision of step c) could be based on whether a time integral of the induced voltage times an appropriately defined normal signal exceeds a predetermined threshold. When the induced voltage has the nominal phase shift, and the normal signal is phase shifted by 90° with respect to the reference signal, such an integral, taken over an integer number of periods of the exciting current, would be zero, and a significant deviation from zero might be regarded as indicative of a defect.

In practice, such an integral can be approximated, more or less precisely, by numerical means, based on samples of the first induced voltage, said samples at least comprising first samples obtained at a first predetermined sampling phase of the alternating current.

The first predetermined sampling phase should be selected so that when the phase shift between the alternating current and said first induced voltage is the nominal phase shift, sampling times of said first samples are shifted with respect to a peak of the first induced voltage, and are preferably synchronized with zero crossings of the first induced voltage. Thus the samples will be zero while the resolver is intact, and whenever the first samples differ from zero by more than an allowed voltage threshold, the resolver can be assumed to be defective.

A second sampling phase for obtaining second samples is preferably selected so that when the phase shift between the alternating current and said first induced voltage is the nominal phase shift, the first sampling phase is at a maximum of the first induced voltage. While the resolver is intact, second samples from both stator windings can be used for determining the orientation of the rotor.

A third sampling phase for obtaining third samples is preferably opposite in phase to the second sampling phase. Thus, second and third samples will usually have opposite signs but identical amounts, and will cancel out in a numerical integration. If they do not cancel out, they indicate a DC bias in the samples, which can be taken account of when evaluating the first samples.

A straightforward way of taking into account a possible DC bias is by judging the phase threshold to be exceeded if said first samples differ from the average of said third and second samples by more than an allowed voltage threshold.

According to a second aspect, the invention provides a resolver controller comprising a power supply for providing an alternating current having an oscillation frequency and a first phase to a rotor winding of a resolver, and a processor adapted to

obtain voltages induced in the stator windings by the alternating current flowing in the rotor; and to decide that the resolver is defective if a shift between phases of a first one of said induced voltages and of the alternating current differs from a nominal phase shift by more than a predetermined phase threshold, wherein the processor is further adapted, in the step of deciding , to

- derive a reference signal which has the oscillation frequency and is phase shifted with respect to the alternating current by said nominal phase shift,
- detect a phase difference between the reference signal and said first induced voltage, and
- decide that the resolver is defective if said phase difference exceeds the phase threshold.

The same controller may comprise calculating means for deducing an angular position of the resolver from voltages sampled from said stator windings.

According to a further aspect, the invention provides a resolver assembly comprising the resolver controller as defined above and an associated resolver.

Such an assembly can further comprise an articulated robot arm having a joint to which the resolver is associated.

According to a still further aspect, the invention can be embodied in a computer-readable storage medium having stored thereon a plurality of instructions which, when executed by a processor, cause the processor

obtain voltages induced in the stator windings by the alternating a current flowing in the rotor; and to decide that the resolver is defective if a shift between phases of a first one of said induced voltages and of the alternating current differs from a nominal phase shift by more than a predetermined phase threshold.

Further features and advantages of the invention will become apparent from the subsequent description of embodiments, referring to the appended drawings.

Fig.1     is a schematic view of a robot and its controller;

Fig. 2     is a schematic diagram of a resolver;

Fig. 3     is a block diagram of the robot and its controller according to an embodiment of the invention; and

Fig. 4     is a block diagram of the controller according to another embodiment.

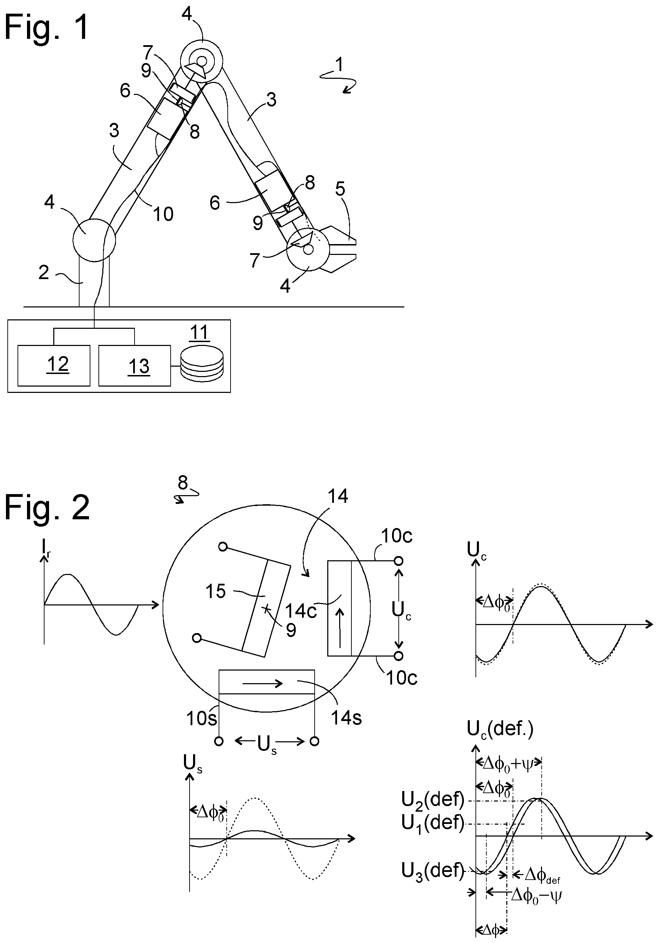

Fig. 1 is a schematic view of a robot system comprising an articulated robot arm 1. The robot arm 1 has a stationary base 2 fixed to a support, and a plurality of links 3 rotatably connected to each other and to the base 2 by joints 4. The most distal link carries an end effector 5. The links 3 are shown with part of their casing removed, so that motors 6 and gears 7 for driving rotation of the joints 4 can be seen inside the casing. A resolver for measuring a rotation position could be mounted at the axis of rotation of each joint 4; in the embodiment of Fig. 1 a resolver 8 is mounted at a shaft 9 extending from the motor 6 to the reducing gear 7.

A wire harness 10 extends along the articulated arm 1 between a controller 11 on one end and the motors 6 and resolvers 8 on the other, supplying the motors 6 with energy from a power supply circuit 12, and feeding back output from the resolvers 8 to a processor 13. The wire harness 10 must adapt to every movement of the robot arm 1, which may wear down the isolation of individual wires in it.

Fig. 2 is a schematic diagram of one of said resolvers 8. The resolver 8 has stator windings 14s, 14c, also referred to here as sine winding 14s and cosine winding 14c, whose axes extend at right angles to one another in a plane, and a rotor winding 15 which is rotatable with respect to the stator windings around an axis of rotation perpendicular to said plane.

Power supply circuit 12 feeds an exciting current $I_r$ to rotor winding 15 by wires of harness 10. The exciting current $I_r$ has an oscillation frequency which is much higher than a rated maximum rotating frequency of the motor 6, e.g. between 1 and 10 kHz, so that in a cycle of the exciting current, rotation of the shaft 9 is negligible. The exciting current $I_r$ induces alternating voltages $U_s$, $U_c$ in sine winding 14s and cosine winding 14c, respectively. When the resolver is operating correctly, the two voltages differ in amplitude depending on the instantaneous orientation of the rotor, i.e. in the configuration shown, with the rotor winding 15 nearly parallel to cosine winding 14c and nearly orthogonal to sine winding 14s, the amplitude of $U_c$ is near maximum, represented by a dotted curve, whereas $U_s$ is close to zero, and phases of $U_s$, $U_c$ are shifted with respect to Ir by substantially the same amount $\Delta\phi_0$, referred to as the nominal phase shift.

While a small load on $U_c$ due to an insulation defect in the wires 10c extending between the cosine winding 14c and the controller 11 may not have a significant influence on the amplitude of $U_c$, it may cause the actual phase shift $\Delta\phi$ to differ noticeably, by $\Delta\phi_{def}$, from the nominal phase shift $\Delta\phi_0$, as shown in the diagram $U_c$ (def.) of Fig. 2. Of course, an insulation defect in wires 10s leading to the sine winding 14s would have the same effect on $U_s$.

According to a first embodiment of the invention, the processor 13 continuously samples $U_s$ and $U_c$, derives a 90° phase shifted signal from one, e.g. $U_s$, preferably by forming its time derivative, $\dot{U}_s$, and approximates the integral $E = \frac{1}{|\dot{U}_s||U_c|}\int_0^{nT} \dot{U}_s U_c dt$ , nT being an integer number of periods of the exciting current $I_r$. When the wires of both stator windings 14s, 14c are intact and have the same phase shift $\Delta\phi$ relative to $I_r$, the integral $E$ will be zero. Any phase shift between $U_s$ and $U_c$ will show by $E$ becoming different from zero, so that based on an appropriately selected threshold $E_{max}$, the resolver 8 can be judged to be defective if $|E| \geq E_{max}$.

In order to prevent a DC bias on one of $U_s$ and $U_c$ or some other outside interference from causing the integral E to diverge, a high-pass filter can be provided. Such a filter can be located between each of the wires 10s, 10c and input ports of the processor 13, or it may be implemented by software within the processor 13, operating either on each of the input signals $U_s$ and $U_c$, or on a product of both, such as $\dot{U}_s U_c$. The high-pass filter is transparent at the frequency of the exciting current $I_r$, but should block the rated maximum rotating frequency of the motor 6.

The above embodiment has a problem in that whenever the rotor winding 15 is perpendicular to one of the stator windings 14s, 14c, no voltage is induced in that winding, and the phase shift $\Delta\phi$ cannot be measured. This problem can be overcome by associating an electric oscillator to each of the stator windings 14s, 14c, which is phase coupled to the induced voltage $U_s$, $U_c$ of its associated stator, and from which a signal proportional to

$\dot{U}_s\big/{|\dot{U}_s|}$   or   $\dot{U}_c\big/{|\dot{U}_c|}$   can be derived even when the

rotor orientation causes $U_s$ or $U_c$ to be zero.

When the phase shift $\Delta\varphi_0$ does not vary much due to temperature or other environmental conditions of the resolver, an oscillator or a delay circuit 16 may be directly connected to the wire exciting current $I_r$ from power supply circuit 12. Processor 13 is connected to both the power supply circuit 12 and each stator winding 14s, 14c, so as to measure, in an initialization procedure, a phase shift between $I_r$ and $U_s$ or $U_c$, which, when the resolver 8 is new and free from defects, will be $\Delta\phi_0$. Processor 13 programs a phase shift of the oscillator or a delay of the delay circuit 16 based on the measured phase shift $\Delta\phi_0$. E.g. the delay circuit 16 may be a programmable counter designed to count between zero and and an initialization value after having been triggered by e.g. a zero crossing of $I_r$, and to toggle an output signal D between 1 and -1 each time it finishes counting. By setting an appropriate initialization value, the processor 13 synchronizes toggling of the delay circuit output D with a maximum of induced voltages $U_s$ or $U_c$ of intact resolver 8, or, in more general terms, sets a 90° phase shift between D and $U_s$ or $U_c$. By periodically sampling D, $U_s$ and $U_c$, processor 13 evaluates

$$E_c = \frac{1}{|U_c|}\int_0^{nT} DU_c\,dt \quad \text{and} \quad E_s = \frac{1}{|U_c|}\int_0^{nT} DU_s\,dt$$

and detects a defect of the resolver whenever $|E_s|$ or $|E_c|$ equals or exceeds $E_{max}$.

According to a second, particularly simple embodiment, processor 13 takes a first sample $U_1$ of $U_s$ and $U_c$ once per period of $I_r$, namely at the nominal phase shift $\Delta\phi_0$ relative to $I_r$. Alternatively, similar to what has been outlined above, $U_c$ may be sampled at a zero phase shift relative to $U_s$ based directly on $U_s$ or on an oscillator synchronized to $U_s$, and vice versa. In either case, while the induced voltage $U_c$ holds the nominal phase shift $\Delta\phi_0$ relative to $I_r$, samples $U_1$ will be zero, whereas in case of a phase shift $\Delta\phi_{def}$ of e.g. 10° the sample $U_1(def)$ (see diagram $U_c(def)$ of Fig. 2) will amount to sin 10°=0.1736 times the peak voltage of $U_c$.

A DC component might be induced in $U_c$ for other reasons than a defective insulation, for example auxiliary circuitry connected to the feed wires of winding 14s or 14c. It may therefore be necessary to distinguish between such a DC component and a deviation from the nominal phase shift. For doing this, additional samples are needed. According to a third embodiment, therefore, second and third samples $U_2$, $U_3$ are collected in each period of $I_r$, namely at phases $\Delta\phi_0-\psi$ and $\Delta\phi_0+\psi$. When there is no DC component, these samples $U_2$, $U_3$ should be proportional to $\sin(-\psi)$ and $\sin(\psi)$, respectively, so that the average of both should vanish. When circuitry connected to the windings 14s, 14c is known to produce a certain DC bias, the average $(U_2+U_3)/2$ can be compared to $U_1$, and the resolver is judged to be defective if either $(U_2+U_3)/2$ is outside an expected range or if $|U_1-(U_2+U_3)/2|$ exceeds a predetermined threshold.

While the resolver 8 is intact, and $U_s$ and $U_c$

have the nominal phase shift $\Delta\phi_0$ relative to $I_r$, the amplitudes of $U_s$ and $U_c$ can be measured, and hence the orientation of the rotor can be determined, by sampling $U_s$ and $U_c$ at their respective peaks or troughs, at phases $\Delta\phi_0-\pi$ and $\Delta\phi_0+\pi$. It is convenient, therefore, to choose $\psi=\pi$, and to collect the second and third samples at phases $\Delta\phi_0-\pi$ and $\Delta\phi_0+\pi$, respectively. Thus, the same circuitry or software for processor 13 can be used both for determining the amplitudes of $U_s$ and $U_c$ and for detecting a possible defect.

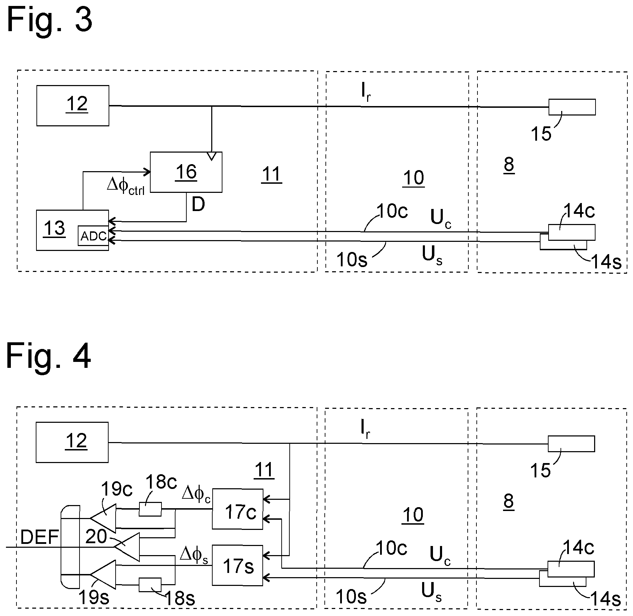

Fig. 4 illustrates an alternative structure of controller 11. The controller has two branches for processing voltages $U_s$ and $U_c$ induced in sine and cosine winding 14s, 14c of the resolver. Since both branches have identical structure, it is sufficient to describe structure and operation of one of them here. A phase detector 17s is connected to power supply circuit 12, on the one hand, and to winding 14s on the other, in order to detect and output a phase difference $\Delta\phi_s$ between the excitation current $I_r$ and induced voltage $U_s$.

The phase detector 17s has its output connected to a storage cell 18s. The storage cell 18s is controlled to store a phase difference $\Delta\phi_s$ output to it when the resolver is operated for the first time or when it has been reset after maintenance or repair. A comparator 19s has one input connected to storage cell 18s and another connected to phase detector 17s, so as to receive the phase shift stored in storage cell 18s as a nominal phase shift $\Delta\phi_0$, and the phase shift $\Delta\phi_s$ from phase detector 17s as an instantaneous phase shift. Comparator 19s compares the difference $|\Delta\phi_0-\Delta\phi_s|$ mod $\pi$ between the two phase shifts with a predetermined threshold, and outputs a signal DEF indicative of a defect of the resolver when the difference exceeds the threshold. It should be noted that the phase difference here should be confined to a range from 0 to $\pi$ by the mod $\pi$ operation and not to 0 to $2\pi$, as might be expected, since an abrupt phase change by $\pi$ will be observed in a perfectly functional resolver whenever the rotation of the rotor causes one of the induced voltage $U_s$ or $U_c$ to switch its sign.

A further comparator 20 may be connected to both phase detector 17s, 17c in order to detect a defect of the resolver if the difference $|\Delta\phi_c-\Delta\phi_s|$ mod $\pi$ exceeds a predetermined threshold.

### Reference numerals

1 robot arm
2 base
3 link
4 joint
5 end effector
6 motor
7 gear
8 resolver

| | |
|---|---|
| 9 | shaft |
| 10 | wire harness |
| 10c | wire |
| 10s | wire |
| 11 | controller |
| 12 | power supply circuit |
| 13 | processor |
| 14c | stator winding (cosine winding) |
| 14s | stator winding (sine winding) |
| 15 | rotor winding |
| 16 | delay circuit |
| 17s | phase detector |
| 17c | phase detector |
| 18s | storage cell |
| 18c | storage cell |
| 19s | comparator |
| 19c | comparator |
| 20 | comparator |

**Claims**

1. A method for monitoring a resolver (8), the resolver (8) comprising a pair of stator windings (14s, 14c) and a rotor winding (15) which is rotatable with respect to said stator windings (14s, 14c) and inductively coupled to these,
the method comprising the steps of

> a) exciting the rotor winding (15) with an alternating current ($I_r$) having a an oscillation frequency and a first phase,
> b) obtaining voltages ($U_s$, $U_c$) induced in the stator windings (14s, 14c) by the alternating current ($I_r$) flowing in the rotor winding (15),
> c) deciding that the resolver (8) is defective if a shift ($\Delta\phi$) between phases of a first one ($U_c$) of said induced voltages ($U_s$, $U_c$) and of the alternating current ($I_r$) differs from a nominal phase shift ($\Delta\phi_0$) by more than a predetermined phase threshold,
> **characterized in that**
> step c) comprises the steps of
> d) deriving a reference signal ($U_s$) which has the oscillation frequency and is phase shifted with respect to the alternating current ($I_r$) by said nominal phase shift ($\Delta\phi_0$),
> e) detecting a phase difference ($\Delta\phi_{def}$) between the reference signal ($U_s$) and said first induced voltage ($U_c$), and
> f) deciding that the resolver (8) is defective if said phase difference ($\Delta\phi_{def}$) exceeds the phase threshold.

2. The method of claim 1, wherein the reference signal ($U_s$) is the second one of said induced voltages ($U_s$)

3. The method of any of the preceding claims, wherein the reference signal (D) is generated independently from said induced voltages ($U_s$, $U_c$).

4. The method of any of the preceding claims, wherein in step c) an excessive phase shift of the first induced voltage ($U_c$) is determined based on samples of the first induced voltage ($U_c$), said samples at least comprising first samples ($U_1$) obtained at a first predetermined sampling phase ($\Delta\phi_0$) of the alternating current ($I_r$).

5. The method of claim 4, wherein said first predetermined sampling phase ($\Delta\phi_0$) is selected so that when the phase shift ($\Delta\phi_0$) between the alternating current ($I_r$) and said first induced voltage ($U_c$) is the nominal phase shift ($\Delta\phi_0$), sampling times of said first samples ($U_1$) are shifted with respect to a peak of the first induced voltage.

6. The method of claim 4, wherein the first sampling phase ($\Delta\phi_0$) is selected so that when the phase shift ($\Delta\phi_0$) between the alternating current ($I_r$) and said first induced voltage ($U_c$) is the nominal phase shift ($\Delta\phi_0$), sampling times of the first samples ($U_1$) are at a zero crossing of the first induced voltage ($U_c$).

7. The method of claim 6, wherein the phase threshold is judged to be exceeded if said first samples differ ($U_1$) from zero by more than an allowed voltage threshold.

8. The method of any of claims 4 to 7, wherein a second sampling phase ($\Delta\phi_0+\psi$) for obtaining second samples ($U_2$) is selected so that when the phase shift between the alternating current ($I_r$) and said first induced voltage is the nominal phase shift ($\Delta\phi_0$), the second sampling phase ($\Delta\phi_0+\psi$) is at a maximum of the first induced voltage ($U_c$).

9. The method of any of claims 4 to 8, wherein a third sampling phase ($\Delta\phi_0-\psi$) for obtaining third samples is opposite in phase to the second sampling phase ($\Delta\phi_0+\psi$).

10. The method of claim 9, wherein the phase threshold is judged to be exceeded if said first samples ($U_1$) differ from the average of said third and second samples ($U_2$, $U_3$) by more than an allowed voltage threshold.

11. A resolver controller (11) comprising a power supply circuit (12) for providing an alternating current ($I_r$) having an oscillation frequency and a first phase to a rotor winding (15) of a resolver (8), and a processor (13) adapted to

> obtain voltages ($U_s$, $U_c$) induced in the stator windings by the alternating current ($I_r$) flowing in the rotor (15); and to

decide that the resolver (8) is defective if a shift ($\Delta\phi$) between phases of a first one ($U_c$) of said induced voltages ($U_s$, $U_c$) and of the alternating current ($I_r$) differs from a nominal phase shift ($\Delta\phi_0$) by more than a predetermined phase threshold,

**characterized in that**

the processor (13) is adapted to

d) derive a reference signal ($U_s$) which has the oscillation frequency and is phase shifted with respect to the alternating current ($I_r$) by said nominal phase shift ($\Delta\phi_0$),

e) detect a phase difference ($\Delta\phi_{def}$) between the reference signal ($U_s$) and said first induced voltage ($U_c$), and

f) decide that the resolver (8) is defective if said phase difference ($\Delta\phi_{def}$) exceeds the phase threshold.

**12.** The resolver controller of claim 11, further comprising calculating means for deducing an angular position of the resolver (8) from voltage samples ($U_2$) taken from said stator windings (14s, 14c).

**13.** A resolver assembly comprising the resolver controller (11) of claim 11 or 12 and an associated resolver (8).

**14.** A computer-readable storage medium having stored thereon a plurality of instructions which, when executed by the resolver controller of claim 11, causes the resolver controller to perform the method of claim 1.

**Patentansprüche**

**1.** Ein Verfahren zur Überwachung eines Resolvers (8), wobei der Resolver (8) ein Paar von Statorwicklungen (14s, 14c) und eine Rotorwicklung (15) aufweist, die in Bezug auf die besagten Statorwicklungen (14s, 14c) drehbar ist und induktiv mit diesen gekoppelt ist, wobei das Verfahren die Schritte umfasst:

a) Anregen der Rotorwicklung (15) mit einem Wechselstrom ($I_r$) mit einer Schwingungsfrequenz und einer ersten Phase,

b) Ermitteln von in den Statorwicklungen ($14_s$, $14_c$) induzierten Spannungen ($U_s$, $U_c$), die durch den in der Rotorwicklung (15) fließenden Wechselstrom ($I_r$) entstehen,

c) Feststellen, dass der Resolver (8) defekt ist, wenn eine Verschiebung ($\Delta\varphi$) zwischen den Phasen einer der induzierten Spannungen ($U_s$, $U_c$) (insbesondere $U_c$) und des Wechselstroms ($I_r$) von einer nominalen Phasenver-

schiebung ($\Delta\varphi0$) um mehr als einen vorgegebenen Phasenschwellenwert abweicht, **dadurch gekennzeichnet, dass** Schritt c) folgende Schritte umfasst

d) Ableitung eines Referenzsignals ($U_s$), dass die Schwingungsfrequenz besitzt und gegenüber dem Wechselstrom ($I_r$) um die genannte Nennphasenverschiebung ($\Delta\varphi_0$) phasenverschoben ist,

e) Erfassung eines Phasenunterschieds ($\Delta\varphi def$) zwischen dem Referenzsignal ($U_s$) und der genannten ersten induzierten Spannung ($U_c$), und

f) Feststellung, dass der Resolver (8) defekt ist, wenn der genannte Phasenunterschied ($\Delta\varphi def$) den Phasenschwellenwert überschreitet.

**2.** Verfahren nach Anspruch 1, wobei das Referenzsignal ($U_s$) die zweite der genannten induzierten Spannungen ($U_s$) ist.

**3.** Verfahren nach einem der vorhergehenden der Ansprüche, wobei das Referenzsignal (D) unabhängig von den genannten induzierten Spannungen ($U_s$, $U_c$) erzeugt wird.

**4.** Verfahren nach einem der vorhergehenden Ansprüche, wobei in Schritt c) eine übermäßige Phasenverschiebung der ersten induzierten Spannung ($U_c$) basierend auf Proben der ersten induzierten Spannung (Uc) bestimmt wird, wobei die genannten Proben mindestens erste Proben ($U_1$) umfassen, die an einer ersten vorbestimmten Abtastphase ($\Delta\varphi_0$) des Wechselstroms ($I_r$) gewonnen wurden.

**5.** Verfahren nach Anspruch 4, wobei die erste vorbestimmte Abtastphase ($\Delta\varphi_0$) so gewählt wird, dass, wenn die Phasenverschiebung ($\Delta\varphi_0$) zwischen dem Wechselstrom ($I_r$) und der ersten induzierten Spannung ($U_c$) die Nennphasenverschiebung ($\Delta\varphi_0$) beträgt, die Abtastzeiten der ersten 30 Proben ($U_1$) in Bezug auf einen Scheitelpunkt der ersten induzierten Spannung verschoben sind.

**6.** Verfahren nach Anspruch 4, wobei die erste Abtastphase ($\Delta\varphi0$) so gewählt ist, dass, wenn die Phasenverschiebung ($\Delta\varphi0$) zwischen dem Wechselstrom ($I_r$) und der genannten ersten induzierten Spannung ($U_c$) der nominalen Phasenverschiebung ($\Delta\varphi0$) entspricht, die Abtastzeiten der ersten Proben ($U_1$) am Nulldurchgang der ersten induzierten Spannung ($U_c$) liegen.

**7.** Verfahren nach Anspruch 6, wobei die Phasenschwelle als überschritten angesehen wird, wenn die ersten Proben ($U_1$) um mehr als einen zulässigen Spannungsschwellenwert von Null abweichen.

**8.** Verfahren nach einem der Ansprüche 4 bis 7, bei dem eine zweite Abtastphase ($\Delta\varphi_0 + \psi$) zur Gewinnung zweiter Proben ($U_2$) so gewählt wird, dass, wenn die Phasenverschiebung zwischen dem Wechselstrom ($I_r$) und der erwähnten ersten induzierten Spannung die Nennphasenverschiebung ($\Delta\varphi_0$) beträgt, die zweite Abtastphase ($\Delta\varphi_0 + \psi$) einem Maximum der ersten induzierten Spannung ($U_c$) entspricht.

**9.** Verfahren nach einem der Ansprüche 4 bis 8, wobei eine dritte Abtastphase ($\Delta\varphi_0-\psi$) zum Gewinn dritter Proben phasenmäßig der zweiten Abtastphase ($\Delta\varphi_0 +_\psi$) entgegengesetzt ist.

**10.** Verfahren nach Anspruch 9, wobei die Phasenschwelle als überschritten beurteilt wird, wenn sich die ersten Proben ($U_1$) um mehr als einen zulässigen Spannungswert vom Durchschnitt der dritten und zweiten Proben ($U_2$, $U_3$) unterscheiden.

**11.** Ein Resolver-Controller (11), der eine Stromversorgungsschaltung (12) umfasst, um einen Wechselstrom ($I_r$) mit einer Schwingungsfrequenz und einer ersten Phase an eine Rotorwicklung (15) eines Resolvers (8) bereitzustellen, und einen Prozessor (13), der darauf ausgelegt ist, Spannungen ($U_s$, $U_c$), die in den Statorwicklungen durch den Wechselstrom ($I_r$), der im Rotor (15) fließt, induziert werden, zu erfassen; und zu entscheiden, dass der Resolver (8) defekt ist, wenn eine Verschiebung ($\Delta\varphi$) zwischen den Phasen einer ersten der genannten induzierten Spannungen ($U_c$) und des Wechselstroms ($I_r$) von einer nominalen Phasenverschiebung ($\Delta\varphi_0$) um mehr als einen vorher festgelegten Phasenschwellenwert abweicht, **dadurch gekennzeichnet, dass** der Prozessor (13) eingerichtet ist,

d) ein Referenzsignal ($U_s$) abzuleiten, das die Oszillationsfrequenz aufweist und in Bezug auf den Wechselstrom ($I_r$) um die genannte Nennphasenverschiebung ($\Delta\varphi_0$) phasenverschoben ist,
e) einen Phasenunterschied ($\Delta\varphi def$) zwischen dem Referenzsignal ($U_s$) und der genannten ersten induzierten Spannung ($U_c$) zu erkennen, und
f) zu entscheiden, dass der Resolver (8) defekt ist, wenn der genannte Phasenunterschied ($\Delta\varphi def$) den Phasenschwellwert überschreitet.

**12.** Der Resolver-Controller nach Anspruch 11, ferner umfassend Berechnungsmittel zum Ermitteln einer Winkelposition des Resolvers (8) aus Spannungsproben ($U_2$), die von den genannten Statorwicklungen ($14_s$, $14_c$) entnommen werden.

**13.** Eine Resolver-Baugruppe, die den Resolver-Controller (11) gemäß Anspruch 11 oder 12 und einen zugehörigen Resolver (8) umfasst.

**14.** Ein computerlesbares Speichermedium, auf dem eine Vielzahl von Anweisungen gespeichert sind, die, wenn sie von einem Resolver-Controller gemäß Anspruch 11 ausgeführt werden, den Prozessor (13) veranlassen, das Verfahren gemäß Anspruch 1 auszuführen.

**Revendications**

**1.** Procédé de surveillance d'un résolveur (8), le résolveur (8) comprenant une paire d'enroulements de stator (14s, 14c) et un enroulement de rotor (15) qui est rotatif par rapport auxdits enroulements de stator (14s, 14c) et couplé par induction à ceux-ci,
le procédé comprenant les étapes suivantes

a) exciter l'enroulement de rotor (15) avec un courant alternatif ($I_r$) ayant une fréquence d'oscillation et une première phase,
b) obtenir des tensions ($U_s$, $U_c$) induites dans les enroulements de stator (14s, 14c) par le courant alternatif ($I_r$) circulant dans l'enroulement de rotor (15),
c) décider que le résolveur (8) est défaillant si un décalage ($\Delta\phi$) entre les phases d'une première tension ($U_c$) desdites tensions induites ($U_s$, $U_c$) et du courant alternatif ($I_r$) diffère d'un déphasage nominal ($\Delta\phi_0$) de plus d'un seuil de phase prédéterminé,
**caractérisé en ce que**
l'étape c) comprend les étapes suivantes
d) dériver un signal de référence ($U_s$) ayant la fréquence d'oscillation et qui est déphasé par rapport au courant alternatif ($I_r$) dudit déphasage nominal ($\Delta\phi_0$),
e) détecter une différence de phase ($\Delta\phi_{def}$) entre le signal de référence ($U_s$) et ladite première tension induite ($U_c$), et
f) décider que le résolveur (8) est défaillant si ladite différence de phase ($\Delta\phi_{def}$) dépasse le seuil de phase.

**2.** Procédé selon la revendication 1, dans lequel le signal de référence ($U_s$) est la deuxième tension desdites tensions induites ($U_s$).

**3.** Procédé selon l'une quelconque des revendications précédentes, dans lequel le signal de référence (D) est généré indépendamment desdites tensions induites ($U_s$, $U_c$).

**4.** Procédé selon l'une quelconque des revendications précédentes, dans lequel, à l'étape c), un déphasage excessif de la première tension induite ($U_c$) est déterminé sur la base d'échantillons de la première tension induite ($U_c$), lesdits échantillons comprenant au moins des premiers échantillons ($U_1$) obtenus à une première phase d'échantillonnage prédéterminée ($\Delta\phi_0$) du courant alternatif ($I_r$).

5. Procédé selon la revendication 4, dans lequel ladite première phase d'échantillonnage prédéterminée ($\Delta\phi_0$) est sélectionnée de telle sorte que lorsque le déphasage ($\Delta\phi_0$) entre le courant alternatif ($I_r$) et ladite première tension induite ($U_c$) est le déphasage nominal ($\Delta\phi_0$), les temps d'échantillonnage desdits premiers échantillons ($U_1$) sont décalés par rapport à un pic de la première tension induite.

6. Procédé selon la revendication 4, dans lequel la première phase d'échantillonnage ($\Delta\phi_0$) est sélectionnée de telle sorte que lorsque le déphasage ($\Delta\phi_0$) entre le courant alternatif ($I_r$) et ladite première tension induite ($U_c$) est le déphasage nominal ($\Delta\phi_0$), les temps d'échantillonnage des premiers échantillons ($U_1$) sont à un passage par zéro de la première tension induite ($U_c$).

7. Procédé selon la revendication 6, dans lequel le seuil de phase est jugé comme étant dépassé si lesdits premiers échantillons diffèrent ($U_1$) de zéro de plus d'un seuil de tension autorisé.

8. Procédé selon l'une quelconque des revendications 4 à 7, dans lequel une deuxième phase d'échantillonnage ($\Delta\varphi_0+\psi$) pour obtenir des deuxièmes échantillons ($U_2$) est sélectionnée de telle sorte que lorsque le déphasage entre le courant alternatif ($I_r$) et ladite première tension induite est le déphasage nominal ($\Delta\phi_0$), la deuxième phase d'échantillonnage ($\Delta\phi_0+\psi$) est au maximum de la première tension induite ($U_c$).

9. Procédé selon l'une quelconque des revendications 4 à 8, dans lequel une troisième phase d'échantillonnage ($\Delta\varphi_0-\psi$) pour obtenir des troisièmes échantillons est en opposition de phase à la deuxième phase d'échantillonnage ($\Delta\varphi_0+\psi$).

10. Procédé selon la revendication 9, dans lequel le seuil de phase est jugé comme étant dépassé si lesdits premiers échantillons ($U_1$) diffèrent de la moyenne desdits troisième et deuxième échantillons ($U_2$, $U_3$) de plus d'un seuil de tension autorisé.

11. Contrôleur de résolveur (11) comprenant un circuit d'alimentation (12) destiné à fournir un courant alternatif ($I_r$) ayant une fréquence d'oscillation et une première phase à un enroulement de rotor (15) d'un résolveur (8), et un processeur (13) conçu pour

    obtenir les tensions ($U_s$, $U_c$) induites dans les enroulements de stator par le courant alternatif ($I_r$) circulant dans le rotor (15) ; et pour décider que le résolveur (8) est défaillant si un décalage ($\Delta\phi$) entre les phases d'une première tension ($U_c$) desdites tensions induites ($U_s$, $U_c$) et du courant alternatif ($I_r$) diffère d'un déphasage nominal ($\Delta\phi_0$) de plus d'un seuil de phase prédéterminé,

**caractérisé en ce que**

le processeur (13) est conçu pour

    d) dériver un signal de référence ($U_s$) ayant la fréquence d'oscillation et qui est déphasé par rapport au courant alternatif ($I_r$) dudit déphasage nominal ($\Delta\phi_0$),
    e) détecter une différence de phase ($\Delta\phi_{der}$) entre le signal de référence ($U_s$) et ladite première tension induite ($U_c$), et
    f) décider que le résolveur (8) est défaillant si ladite différence de phase ($\Delta\phi_{def}$) dépasse le seuil de phase.

12. Contrôleur de résolveur selon la revendication 11, comprenant en outre un moyen de calcul pour déduire une position angulaire du résolveur (8) à partir d'échantillons de tension ($U_2$) prélevés sur lesdits enroulements de stator (14s, 14c).

13. Ensemble de résolveur comprenant le contrôleur de résolveur (11) selon la revendication 11 ou la revendication 12 et un résolveur associé (8).

14. Support de stockage lisible par ordinateur sur lequel sont stockées une pluralité d'instructions qui, lorsqu'elles sont exécutées par le contrôleur de résolveur selon la revendication 11, amènent le contrôleur de résolveur à réaliser le procédé selon la revendication 1.

# Fig. 1

# Fig. 2

# Fig. 3

# Fig. 4

**EP 4 476 502 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016119814 A1
- JP 2006138778 A